# EUROPEAN PATENT APPLICATION

(11) **EP 1 628 021 A1**
(43) Date of publication of application: **22.02.2006**
(21) Application number: 05016471.4
(22) Date of filing: 29.07.2005
(51) Int. Cl.: F16B 19/00

(54) **Locking arrangement for at least two bolts to be inserted into bores of plates**

(30) Priority: 17.08.2004 GB 0418314
(71) Applicant: AGCO GmbH, 87616 Marktoberdorf (DE)
(72) Inventor: Heisler, Robert, 87616 Marktoberdorf (DE); Kapfer, Johannes, 87600 Kaufbeuren (DE); Wurtele, Eberhard, 87616 Marktoberdorf (DE)
(74) Representative: Morrall, Roger

(57) **Abstract**

In a locking arrangement of at least two bolts (4,5), the bolts are designed and arranged to extend through bores in at least one plate (1,2) and in an extension plate (3). Each of the bolts (4,5) includes a key (8) located at one end. The bolts (4,5) have heads (6,7) located at the other end of each bolt. Each head (6,7) is rigidly connected with its bolt (4,5) and extends in a radial direction with respect to the axis of the bolt. The heads (6,7) interengage each other and are designed as a tongue (9) and groove (10) and arranged to prevent a rotational movement of the bolts (4,5).

## Description

The invention relates to a locking arrangement of at least two bolts. The bolts are designed and arranged to extend through bores in at least one plate and in an extension plate. Each bolt includes a key located at one end of the bolt. The key serves to prevent axial movement of the bolt.

Two or more bolts are used for instance on agricultural vehicles and equipment to pivotally connect two or more elements. The bolts are inserted in bores of the elements and secured in axial direction to prevent falling out of the bores. The bolt comprises a head on one end and a key on the other end securing against fall out. The key is inserted into a cross hole of the other end of the bolt. The bolts have to be designed not to rotate, otherwise a substantial wear occurs with respect of the bores. This is especially the case if one of the elements is made of cast iron.

A locking arrangement for bolts is known from a leaflet of the company Hans Sauter GmbH "Frontkraftheber und Frontzapfwelle für Claas-Traktoren" (front power lift and front take off shaft for Claas tractors). Lower elements of a three-point linkage of a front power lift are shown comprising the frame of the vehicle and two lower elements connected with each other by two bolts. One of the bolts always remains in its position, while the other bolt can be extracted from its bore when necessary. In this way there are two positions between the frame and the lower elements, one fixed position for transport and one floating position. Depending on the desired position the frame includes a bore in which the other bolt has to be inserted. In the floating position one bolt is removed and the lower elements are pivotally connected to the frame for pivoting through a certain angle, the remaining bolt serving as the pivot axis. The bolts are designed to have a head in the shape of a cam fitting into an opening in the outside of the frame. When mounting the bolts it is therefore necessary to turn the bolts to an angle in which the cam fits into the opening in the frame to have an interlocking connection and to prevent the bolts from rotating. It is a disadvantage of this design that the manufacturing costs are high as there has to be close tolerances on the shape of the cam head and opening to prevent even small rotation.

It is the object of the invention to provide a locking arrangement for bolts which is less costly to be produced and which has better locking against rotation.

According to the invention this is achieved by a locking arrangement of at least two bolts, the bolts being designed and arranged to extend through bores in at least one plate and in an extension plate and including a key located at one end of each bolt, wherein the bolts have heads located at the other end of each bolt, each head being rigidly connected with its bolt and extending in a radial direction with respect to the axis of the bolt, and the heads engaging each other and being designed with interlocking formations (e.g. a cooperating tongue and groove) to prevent a rotational movement of the at least two bolts.

The heads may be designed similar to a self blocking pair of toothed wheels. In this manner the bolts block and secure each other. No further element is needed to complete the locking arrangement.

The locking arrangement is not limited to two bolts. A larger number of bolts positioned in a group may be secured in this manner. The amount of possible motion of the bolts in a rotational direction only depends on the accuracy with which the interengaging heads are manufactured. The security against rotation of the bolts can be increased by making the play between the interlocking formations as little as possible.

Claim 2 describes an embodiment of the invention in which the heads have a simple interengaging tongue and groove design. The heads may extend to bridge a large distance between the axes of the bolts. The bolts may therefore be used for varying distances between the axes.

Claim 3 describes an embodiment of the invention in which the heads of the bolts may be manufactured without substantial efforts with respect to accuracy.

According to a further embodiment of the invention the heads of the at least two bolts are designed to have an identical fork-like shape with two tongues and one groove, the tongues and the groove having the same width. Due to the identical configuration the manufacture, the handling and the storing of the bolts is substantially simplified.

The locking arrangement may also be designed so that the bolts can be positioned in a first pair of bores to lock the at least one plate and extension plate in a fixed position relative to each other with their head engaged to prevent rotational motion of the bolts, and one of the bolts can alternatively be arranged to extend through a further bore in one of said at least one plate and extension plate and through a slot in the other of the extension plate and said at least one plate to permit pivoting between the plates about the other bolt with the heads engaged to prevent said rotational motion of the bolts.

The invention will be explained with two embodiments with respect to the accompanying drawings.
- **Fig. 1**: shows a first embodiment of the locking arrangement;
- **Fig. 2**: shows a cross-sectional view of the embodiment of Fig. 1;
- **Fig. 3**: shows a second embodiment of the locking arrangement of the bolts, and
- **Fig. 4**: shows a third embodiment of the invention.

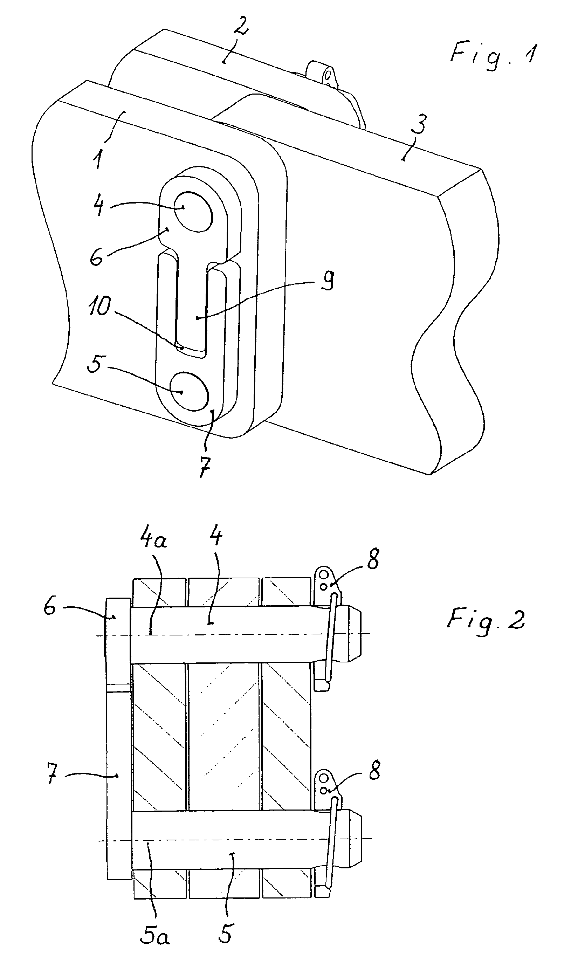

In the embodiment shown in Figs. 1 and 2 between two plates 1 and 2 is positioned an extension plate 3. The extension plate 3 may be mounted and demounted without using special tools. The plates 1 and 2 and the extension plate 3 are formed from sheet metal and each have two aligning bores located one above the other. Two bolts 4, 5 are inserted into the bores. Both of the bolts 4, 5 have heads (shackles) 6, 7 extending in radial direction with respect to the axes 4a, 5a of the bolts. At the other end of each bolt a cross hole is provided in which a key 8 is inserted serving to prevent falling out.

The heads 6, 7 are designed to fit to each other and to block rotational movement of the bolts. This design is similar to a pair of toothed wheels meshing with each other, but having a configuration to block any rotational movement. The head 6 of the upper bolt 4 is designed as a tongue 9 extending straight for a substantial length in a radial direction, while the head 7 of the lower bolt 5 is designed with a fork-like shape extending in a radial direction and comprises a groove 10. The width of the groove 10 is adapted to the width of the tongue 9 without substantial play between. During mounting of the bolts 4, 5 the tongue 9 is placed in the groove 10 and a securing against rotational movement thus occurs. This securing remains as long as a sufficient overlapping between the tongue 9 and the groove 10 takes place. By providing a long tongue 9 and a long groove 10 bolts 4, 5 may be used for varying distances between the axes 4a and 5a.

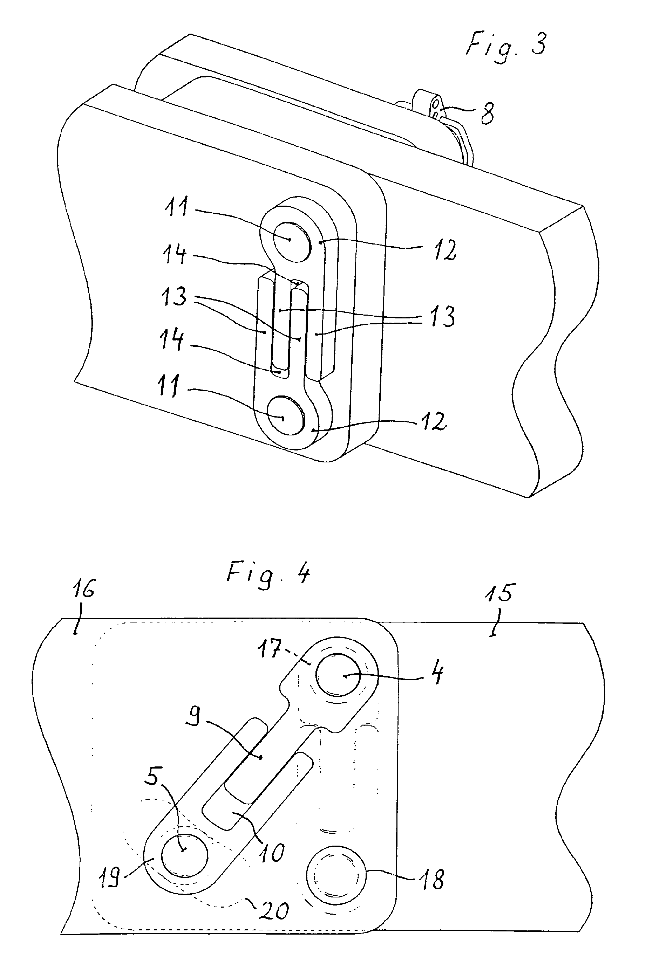

Contrary to the embodiment of Figs. 1 and 2 the embodiment of Fig. 3 shows bolts 11 having identical heads 12. Both fork shaped parts of the heads 12 are designed in the form of tongues 13 having the same dimensions. The grooves 14 between of the tongues 13 of heads 12 fit with the tongues 13 as described above. Consequently, there are two possible positions between the heads when mounting the bolts. In the second position (not shown) the upper fork is twined through 180 degrees about a vertical axis so that the right-hand tongue 13 of the upper fork of Figure 3 is now positioned to the left of the left-hand tongue 13 of the lower fork in Figure 3.

As can be seen from Fig. 1 the extension plate 3 has to be connected between the plates 1 and 2 in a fixed manner. On the contrary, Fig. 4 shows an embodiment in which the extension plate 15 may be connected with the plates 16 in a first fixed position and in a second pivotal or floating position. In addition to the bores 17 and 18 one above the other serving for the fixed position, the plates 16 comprise further aligned bores 19 and the extension plate 15 has an elongated slot 20 to receive the lower bolt 5 in the floating position between the extension plate 15 and the plates 16. The distance between the axis of the bore 17 of upper bolt 4 to the bores 19 of the plates 16 is different to the distance between the bores 17 and 18 to avoid faults when mounting. If the floating position between the extension plate 15 and the plates 16 is to be selected the bolt 5 is inserted into the bore 19 having a larger distance from the bolt 4 compared with the fix position of the bolts 4 and 5 shown in dash-dotted lines. In both positions rotational movement of the bolts 4, 5 with respect to the bores 17 and 18 and (some) of the bores 17 and19 respectively is prevented by the interengaging of the heads.

## Claims

1. A locking arrangement of at least two bolts (4, 5; 11), the bolts (4, 5; 11) being designed and arranged to extend through bores in at least one plate (1; 2) and an extension plate (3) and including a key (8) located at one end of each bolt, wherein the bolts (4, 5; 11) comprise heads (6, 7; 12) located at the other end of each bolt, each head (6; 7; 12) is firmly connected with its bolt (4; 5; 11) and extends in a radial direction with respect to the axis (4a; 5a) of the bolt, and the heads (6, 7; 12) engaging each other and are designed as to prevent a rotational motion of the at least two bolts (4, 5; 11).

2. A locking arrangement according to claim 1, wherein the head (7) of one of the bolts is designed to have a fork-like shape with a groove (10) extending in radial direction, while the head (6) of the other bolt (4) is designed to have a tongue (9) extending in radial direction the tongue and groove being adapted to engage each other to prevent the rotational motion of the bolts (4,5:11).

3. A locking arrangement according to claim 1 and 2, wherein, the contacting surfaces of the tongue (9) and groove (10) design are designed to be straight.

4. A locking arrangement according to claim 1, wherein, the heads (12) of the at least two bolts (11) are designed to have an identical fork-like shape with two tongues (13) and one groove (14), the tongues (13) and the groove (14) having the same width.

5. A locking arrangement according to any one of claims 2 to 4 wherein the length of the tongue and groove allows use of the arrangement with the bolts positioned varying distances apart.

6. A locking arrangement according to any one of claims 1 to 5 where the bolts can be positioned in a first pair of bores to lock the at least one plate and extension plate in a fixed position relative to each other with their head engaged to prevent rotational motion of the bolts, and one of the bolts can alternatively be arranged to extend through a further bore in one of said at least one plate and extension plate and through a slot in the other of the plate and through a slot in the other of the extension plate and said at least one plate to permit pivoting between the plates about the other bolt with the heads engaged to prevent said rotational motion of the bolts.
